# EUROPÄISCHE PATENTANMELDUNG

(11) **EP 4 242 477 A2**
(43) Veröffentlichungstag der Anmeldung: **13.09.2023**
(21) Anmeldenummer: 23166183.6
(22) Anmeldetag: 22.05.2018
(51) Int. Cl.: F16B 25/00

(54) **KÖRPERSCHALLENTKOPPELNDES BEFESTIGUNGSELEMENT UND AUFHÄNGESYSTEM MIT EINEM SOLCHEN BEFESTIGUNGSELEMENT**

(62) Teilanmeldung aus: 18173475.7
(71) Anmelder: SFS Group International AG, 9435 Heerbrugg (CH)
(72) Erfinder: Bregar, Sebastian, 9450 Lüchingen (CH); Rohner, Markus Andreas, 9436 Balgach (CH)

(57) **Zusammenfassung**

Ein schallentkoppelndes Befestigungselement 10 hat einen im Wesentlichen zylindrischen, sich entlang einer Mittenlängsachse 30 erstreckenden Körper 20, der sich, an einem Ende beginnend in einen Kopf 12 einen Unterkopfabschnitt 14 und einen Halsbereich 16 untergliedert, an den sich ein Schaftabschnitt 18 anschliesst, der mit einem Endabschnitt 26 abschliesst. Oberflächenteile des Kopfes 12, des Unterkopfabschnitts 14 und des Halsbereichs 16 sind mit einem hartelastischen Material 32 bedeckt, wobei jedoch eine stirnseitige, vom Schaftabschnitt wegweisende Fläche des Kopfbereichs 22 und der Schaftabschnitt 18 unbedeckt bleiben. Somit sind alle radial nach aussen von der Mittelängsachse 30 weg weisenden Oberflächenbereiche mit hartelastischem Material 32 bedeckt.

Ein Aufhängesystem 40 für Einrichtungsgegenstände 46 wie Möbel, Schränke und Regale an einem Wandabschnitt 42 umfasst eine Tragleiste 52 mit Lastaufnahmepunkten 54 für solche Einrichtungsgegenstände 46 und Befestigungspunkte 56, 56' für solche schallentkoppelnden Befestigungselemente 44, 45.

## Beschreibung

Die vorliegende Erfindung befasst sich mit einem Befestigungselement, insbesondere einer Schraube, deren spezifische Auslegung eine schallentkoppelnde Wirkung zwischen den Bauteilen ermöglicht, die die Schraube verbindet.

### HINTERGRUND

Im Bauwesen ist es häufig erforderlich, Einrichtungsgegenstände wie Möbel, Schränke, Regale an Wänden zu befestigen. Die lastabtragenden Verbindungselemente übertragen damit aber zwangsläufig auch Erschütterungen, die beim Belasten oder Entlasten der Einrichtungsgegenstände entstehen. Mit "schallentkoppelnd" ist daher im engeren Sinne "körperschallentkoppelnd" gemeint, auch wenn im Folgenden der Einfachheit halber von "schallentkoppelnd" die Rede sein wird.

Eine Schallentkopplung ist in vielen Fällen wünschenswert, aus Gründen der Geräuschdämmung wie auch zur Vermeidung von Beschädigungen der Wandelemente.

### STAND DER TECHNIK

Es sind im Stand der Technik verschiedene Lösungen für dieses Problem der Schallentkopplung bekannt. So können elastische und/oder dämpfende Elemente vorgesehen werden, die zwischen Einrichtungsgegenstand und Wand bzw. Wandbauteil eingefügt werden. Bei einer Befestigung über Schraubverbindungen sind dämpfende Unterlagscheiben oder Kombinationen aus metallischen Unterlagscheiben mit einem flächigen, ringförmigen Feder- oder Dämpfungselementen aus Kunststoff, Gummi, Kork bekannt. Diese haben den Nachteil, dass sie jeweils separat vor der Montage dem Befestigungselement hinzugefügt werden müssen. Wird ein solches Dämpfungselement bei der Montage vergessen, falsch oder unvollständig eingesetzt, können (Körper-)Schallbrücken die Folge sein, die später sehr schwer zu entdecken und/oder zu korrigieren sind.

Ganz generell haben solche Lösungen den Nachteil, dass sie die Dämpfung im Wesentlichen nur in Richtung der Schraubenlängsachse ermöglichen. Häufig berührt aber der Schraubenschaft den Einrichtungsgegenstand bzw. dessen Befestigungspunkt und nicht allein die Unterseite des Schraubenkopfes bzw. der Unterlagscheibe. Dadurch entstehen Schallbrücken.

Es besteht von daher das Bedürfnis, ein Befestigungselement, insbesondere eine Schraube zu schaffen, die den Nachteil von Unterlagscheiben mit Dämpfungselementen vermeidet und darüber hinaus einfach in der Herstellung, der Konfektionierung und der Anwendung ist.

### BESCHREIBUNG DER ERFINDUNG

Diese Aufgabe wird durch ein schallentkoppelndes Befestigungselement gelöst mit den Merkmalen des unabhängigen Anspruchs 1. Ein Aufhängesystem für Einrichtungsgegenstände, das solche schallentkoppelnde Befestigungselemente nutzt, wird ebenfalls beschrieben. Unteransprüche beschreiben jeweils weitere Varianten und Ausführungsbeispiele.

Ein schallentkoppelndes Befestigungselement 10 nach der vorliegenden Erfindung hat einen im Wesentlichen zylindrischen, sich entlang einer Mittenlängsachse 30 erstreckenden Körper 20. Dieser Körper 20 hat an einem Ende einen Kopf 12 mit einem Kraftangriff 28. Dieser kann wie im Stand der Technik bekannt ausgeführt sein. An den Kopf 12 schliesst sich ein Unterkopfabschnitt 14 und ein Halsbereich 16 an. Daran wiederum grenzt ein Schaftabschnitt 18, der mit einem Endabschnitt 26 abschliesst. Dieser Endabschnitt kann eine Bohrspitze sein, eine Verdrängerspitze oder eine andere, je nach vorhandenem Untergrund gewählte Spitze, die das Einformen erleichtert. Kennzeichnend ist hierbei, dass Oberflächenteile des Kopfes 12, des Unterkopfabschnitts 14 und des Halsbereichs 16 mit einem hartelastischen Material bedeckt sind, aber eine stirnseitige, vom Schaftabschnitt wegweisende Fläche des Kopfbereichs 22 unbedeckt bleibt. Mit hartelastisch ist hierbei gemeint, dass das Material elastische Eigenschaften (formreversibel) aufweist, gleichzeitig aber geeignet ist, die im Einsatz vorgesehenen Lasten zu übertragen ohne die gewünschten Eigenschaften zu verlieren. Die Materialauswahl erfolgt so, dass das Material im verbauten Zustand (also unter Vorspannung) die körperschalldämpfende Wirkung entfalten kann. Dies können beispielsweise Thermoplaste leisten, insbesondere TPE (thermoplastische Elastomere), TPU (thermoplastische Urethane) und TPV (thermoplastische Vulkanisate). Ein Thermoplast (bevorzugt TPE) mit einer ShoreA Härte von ca. 60 hat im beschriebenen Einsatzfall gute Dämpfungswerte ergeben. Je nach Einsatzbereich und Lastauslegung wird eine ShoreA-Härte von 40-70, bevorzugt 45-60 angestrebt.

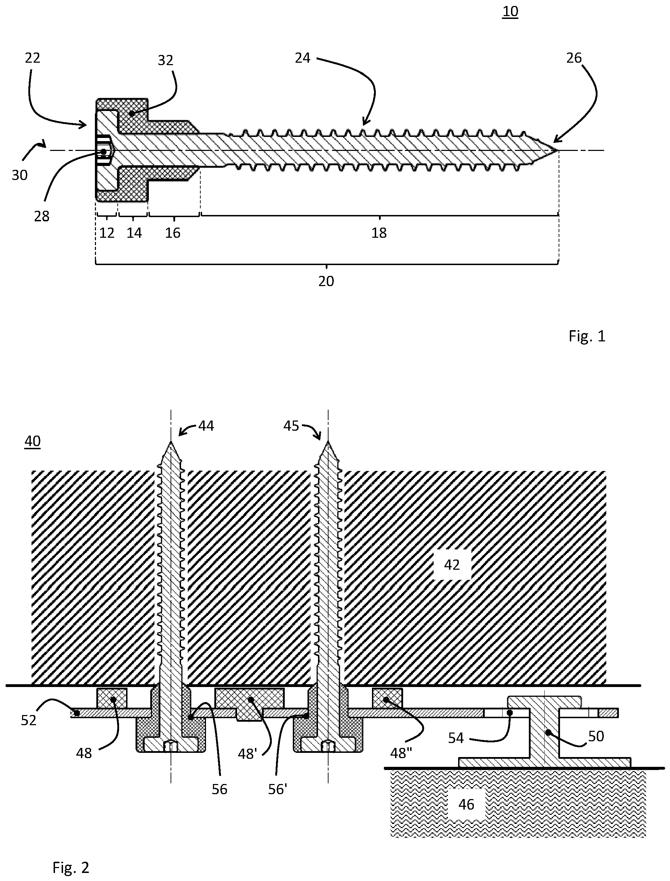

Mit Blick auf Figur 1 wird deutlich, dass die drei zumindest teilweise ummantelten Bereiche Kopf 12, Unterkopfabschnitt 14, Halsabschnitt 16 bevorzugt eine geschlossene Oberfläche zeigen. Der Halsabschnitt 16 befindet sich auf dem Schaft des Befestigungselementes, dort wird der effektive Aussendurchmesser wegen der Ummantelung grösser sein als auf dem anschliessenden Schaftabschnitt 18, der kein hartelastisches Material aufweist. Zusammengefasst sind also am Kopf 12, im Unterkopfabschnitt 14 und im Halsbereich 16 alle radial nach aussen von der Mittelängsachse weg weisenden Oberflächenbereiche mit hartelastischem Material bedeckt und bilden somit eine Art Manschette. Auch der Kopf 12 weist am Rand eine Ummantelung auf als eine Art Flankenschutz.

Als hartelastisches Material sind dabei je nach Einsatz- und Lastprofil verschiedene Kunststoffe verwendbar, Kautschuk, Gummi oder ähnliches, sowie Kombinationen davon. Denkbar ist auch, für die verschiedenen Bereiche Kopf 12, Unterkopfabschnitt 14 und Halsbereich 16 unterschiedliche Materialien zu verwenden, also mit verschiedenen Dämpfungs-/Elastizitätseigenschaften.

Der Kopf 12 des schallentkoppelnden Befestigungselements kann bevorzugt flanschartig ausgeführt sein und somit einen Aussendurchmesser aufweisen, der grösser als der grösste Aussendurchmesser im Schaftbereich 18 ist. Diese Ausführung ähnelt also einem Nagel- oder Schraubenkopf. Durch diese Ausführung entsteht ein Unterkopfbereich, eine Unterseite des Kopfes, die flach, das heisst eben und rechtwinklig orientiert zur Mittenlängsachse oder verkippt hierzu ausgeführt sein kann (also mit konischer oder kegeliger Oberfläche). Besonders bevorzugt wird auch diese Fläche mit demselben hartelastischen Material bedeckt sein. Ein solcher Unterkopfbereich 14, wie in der Figur 1 gezeigt, weist damit eine Oberfläche im Schaftbereich auf (radial von der Achse nach aussen orientiert) wie auch eine Oberfläche deren Orientierung in Schaftlängsrichtung ist.

Der Begriff Befestigungselement wurde bewusst gewählt, weil das erfinderische Prinzip nicht auf einen Befestigertyp beschränkt ist. Ein Befestigungselement kann eine Schraube, ein Bolzen, ein Maueranker, eine Klemmvorrichtung sein. In der Ausführung als Schraube kann der Schaftabschnitt 18 einen Gewindeabschnitt 24 aufweisen.

Die Herstellung eines erfindungsgemässen Befestigungselementes kann durch das Umspritzen einer Schraube, eines Bolzens, eines Mauerankers mit einem hartelastischen, spritzgiessfähigen Material erfolgen. Diese Vorgehensweise ist die bei weitem bevorzugte, weil sie perfekt formschlüssige Befestiger mit Manschette herzustellen vermag. Alternativ können auch vorgefertigte Formteile aufgesteckt und durch Erhitzen aufgeschrumpft, verklebt oder verschweisst werden. Wichtig ist, dass die oben beschriebene Manschette als definierte Ummantelung resultiert.

Mit den beschriebenen schallentkoppelnden Befestigungselementen lässt sich ein Aufhängesystem 40 für Einrichtungsgegenstände 46 wie Möbel, Schränke und Regale realisieren, die an einer Wand bzw. einem Wandabschnitt 42 schallentkoppelt befestigt werden sollen. Als Zwischenelement zwischen Wand und Möbelstück fungiert eine Tragleiste 52 mit Lastaufnahmepunkten 54 für solche Einrichtungsgegenstände 46. Mit Lastaufnahmepunkt ist dabei eine Aufnahme, ein Befestigungsloch, eine Anhänge-, Einsteck- oder Ankoppelvorrichtung gemeint. Befestigungspunkte 56, 56' dienen der Aufnahme von schallentkoppelnden Befestigungselemente 44, 45 als Verbindung zur Wand. Bevorzugt sind dies Bohrungen, die auf den Durchmesser des schallentkoppelnden Befestigers im Halsbereich 16 angepasst sind. Die Verbindung soll bevorzugt formschlüssig sein.

Die Verwendung einer Tragleiste 52 macht in mehrfacher Hinsicht Sinn. Sie ist leichter und kleiner als der Einrichtungsgegenstand selber und kann daher an der Wand leichter ausgerichtet und befestigt werden. Erst danach wird das Möbelstück 46 befestigt - lösbar eingehängt, eingeklickt oder unlösbar verschraubt oder eingerastet. Dazu kann es sinnvoll sein, am Möbelstück einen Adapter, ein passendes Verbindungselement 50 anzubringen, welches in die Tragleiste 52 eingehängt (oder anderweitig angebracht) werden kann. Dieses Verbindungselement 50 kann standardmässig bei der Herstellung des Einrichtungsgegenstandes am statisch idealen Punkt angebracht werden und erfordert damit vor Ort keinen zusätzlichen Verarbeitungsschritt.

In einer weiter verbesserten Variante wird das Aufhängesystem 40 Dämpfungselemente 48, 48', 48" zwischen Wandabschnitt 42 und Tragleiste 52 vorsehen Damit wird ein weiteres Dämpfungselement im Aufhängesystem vorgesehen, das verhindert, dass Erschütterungen bzw. Schall von der Tragleiste 52 auf die Wand 42 übertragen werden. Diese Dämpfungselemente 48, 48', 48" können als punktuelle oder flächige Silikon- oder Gummielemente ausgeführt werden, die in einer Variante in dafür vorgesehene Bohrungen der Tragleiste eingeklipst, -geklemmt oder geklebt werden. Ein Beispiel dafür zeigt Merkmal 48'. Diese flächigen Dämpfungselemente erlauben auch evtl. Unebenheiten der Wand 42 gegenüber der Tragleiste 52 auszugleichen. Die schallentkoppelnden Befestigungselemente 44, 45 klemmen die Tragleiste 52 zwischen der hartelastischen Manschette (Bereiche 12, 14, 16) und den Dämpfungselementen 48, 48', 48".

Die Tragleiste ist somit in der beschriebenen Ausführung komplett in schall- bzw. schwingungsdämpfenden Materialien gelagert. Somit kann die Halterung des Möbelstücks 46 an der Tragleiste 52 "hart" erfolgen, sprich auf Dämpfungselemente verzichten und auch nur so viele Lastaufnahmepunkte 54 vorsehen, wie aus statischen Gründen notwendig sind. Die Lastableitung in die Wand 42 wiederum wird durch so viele schallentkoppelnde Befestigungselemente 44, 45 vorgenommen, wie dies aufgrund des Gewichts des Möbelstücks bzw. der Beschaffenheit des Untergrundes (Wand 42) erforderlich ist. Auf diese Weise kann dieses Aufhängesystem sehr präzise an verschiedene Aufgabenprofile angepasst werden.

Eine Tragleiste 52 wird damit bevorzugt als Metallteil mit einer Vielzahl von Bohrungen bzw. Aussparungen (Befestigungspunkte 56, 56', Lastaufnahmepunkt(e) 54) ausgeführt. Sie kann günstig als Stanzteil oder als Stanzbiegeteil ausgeführt werden. Falze können als Versteifungselemente vorgesehen werden. Eine Oberflächenbehandlung (Verzinken, Lackieren) kann zur Erhöhung von Korrosionsschutz oder als Markierung vorgesehen werden.

Das vorhin erwähnte Verbindungselement 50, das bevorzugt am Möbelstück / Einrichtungsgegenstand 46 vormontiert wird, kann bevorzugt als Einhängeelement ausgeführt werden. Als Ausführungsbeispiel kann die in Figur 2 gezeigte Form eines Dornes oder Zapfens mit einem Endflansch angeführt werden. Als Material findet bevorzugt Metall Verwendung. Die Herstellung kann als Formteil, Pressteil oder Drehteil erfolgen. Die Grösse und Auslegung orientiert sich an den statischen Anforderungen und kann vom Fachmann im Rahmen seiner Kenntnisse vorgenommen werden.

### BESCHREIBUNG DER FIGUREN

Figur 1 zeigt einen Längsschnitt durch ein schallentkoppelndes Befestigungselement gemäss der vorliegenden Erfindung.
Figur 2 zeigt schematisch im horizontalen Querschnitt ein Aufhängesystem für Möbelstücke mit ein schallentkoppelnden Befestigungselementen gemäss der vorliegenden Erfindung.

Figur 1 zeigt ein schallentkoppelndes Befestigungselement 10 gemäss der vorliegenden Erfindung in einer bevorzugten Ausführung als teilummantelte Schraube. Die Mittenlängsachse ist mit 30 markiert. Am Kopf 12 ist ein an seinen Flanken mit einem hartelastischen Material 32 ummantelter Schraubenkopf gezeigt, seine nach links weisende Stirnfläche 22 ist unbedeckt. In den Kopf ist in üblicher Weise ein Kraftangriff 28 eingearbeitet.

Die Ummantelung mit dem hartelastischen Material 32 bedeckt also die radial aussenliegenden Flanken des Kopfes 12, des Unterkopfbereichs 14 und des Halsbereichs 16. Zusammen werden sie in dieser Beschreibung als Manschette bezeichnet. Entlang der Längsachse 30 schliesst sich der Schaftabschnitt 18 an, der nicht mit hartelastischem Material bedeckt ist. Er kann jedoch in bekannter Weise mit anderen funktionellen Beschichtungen versehen werden, wie Lacken, Gleitschichten, Härteüberzügen o.ä., die das Einformen und Kennzeichnung (Farbkodierung) erleichtern können. Im gezeigten Beispiel trägt der Schaftabschnitt 18 ein Gewinde 24. Den Abschluss der gezeigten Variante von Figur 1 bildet die Spitze (Endbereich) des Befestigers, hier als Eindringspitze dargestellt. Dies ist jedoch nur eine von mehreren möglichen Ausführungsvarianten des Endabschnittes. Die Abschnitte Kopf 12, Unterkopfbereich 14, Halsbereich 16 mit anschliessendem Schaftbereich 18 bilden den Körper 20 des Befestigers.

Figur 2 zeigt ein erfindungsgemässes Aufhängesystem 40. Dessen wesentliche Bestandteile sind die Tragleiste 52 und die schallentkoppelnden Befestigungselemente 44, 45. Ergänzend können hinzu kommen die Dämpfungselemente 48, 48', 48", wir im funktionellen Teil der Beschreibung ausgeführt. Die Einbausituation zeigt die Tragleiste 52 an einer Wand bzw. einem Wandelement 42 befestigt wobei die Befestigungselemente 44, 45 die Tragleiste 52 via die Dämpfungselemente 48 klemmen. Rudimentär angedeutet ist ein Möbelstück / Einrichtungsgegenstand 46, der via ein Verbindungselement 50 an die Tragleiste 52 gehängt werden kann.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein. Eine nicht-explizite Darstellung einer Kombination von Merkmalen bedeutet nicht, dass eine solche Kombination nicht sinnvoll oder nicht möglich ist.

### WEITERE BEISPIELE

Ein köperschallentkoppelndes Befestigungselement (10) umfasst einen im Wesentlichen zylindrischen, sich entlang einer Mittenlängsachse (30) erstreckenden Körper (20), wobei der Körper an einem Ende einen Kopf (12) mit einem Kraftangriff (28) umfasst, an den sich ein Unterkopfabschnitt (14) und ein Halsbereich (16) anschliesst sowie ein Schaftabschnitt (18), der mit einem Endabschnitt (26) abschliesst. Es zeichnet sich dadurch aus, dass Oberflächenteile des Kopfes (12), des Unterkopfabschnitts (14) und des Halsbereichs (16) mit einem hartelastischen Material (32) bedeckt sind, aber eine stirnseitige, vom Schaftabschnitt wegweisende Fläche des Kopfbereichs (22) unbedeckt bleibt.

Das vorgenannte Befestigungselement kann sich dadurch auszeichnen, dass der Schaftabschnitt (18) nicht von hartelastischem Material bedeckt ist.

Ebenfalls können beim vorgenannten Befestigungselement am Kopf (12), im Unterkopfabschnitt (14) und im Halsbereich (16) alle radial nach aussen von der Mittelängsachse (30) weg weisenden Oberflächenbereiche mit hartelastischem Material (32) bedeckt sein.

Beim Befestigungselement der vorgenannten Bauweise kann der Kopf (12) flanschartig ausgeführt sein und einen Aussendurchmesser aufweisen, der grösser als der grösste Aussendurchmesser im Schaftbereich (18) ist.

Weiterhin kann beim Befestigungselement die in Richtung des Schaftabschnittes (18) orientierte Unterseite des Kopfes (12) ebenfalls mit hartelastischem Material bedeckt sein.

Das vorgenannte Befestigungselement kann eine Schraube, ein Bolzen, ein Maueranker, eine Klemmvorrichtung sein. Der Schaftabschnitt (18) kann einen Gewindeabschnitt (24) aufweisen.

Bei dem vorgenannten Befestigungselement kann das hartelastische Material ein Thermoplast, insbesondere ein thermoplastisches Elastomer, Urethan und Vulkanisat (TPE, TPU, TPV) sein. Bevorzugt ist das hartelastische Material ein Thermoplast, dessen ShoreA Härte zwischen 40 und 70 (beide Werte incl.) liegt. Weiter bevorzugt ist das hartelastische Material ein Thermoplast, dessen ShoreA Härte zwischen 45 und 60 (beide Werte incl.) liegt.

Ein Aufhängesystem (40) für Einrichtungsgegenstände (46) wie Möbel, Schränke und Regale an einem Wandabschnitt (42)umfasst eine Tragleiste (52) mit Lastaufnahmepunkten (54) für solche Einrichtungsgegenstände (46) und Befestigungspunkte (56, 56') für körperschallentkoppelnde Befestigungselemente (44, 45) wie oben beschrieben.

Bevorzugt werden beim Aufhängesystem (40) Dämpfungselemente (48, 48', 48") zwischen Wandabschnitt (42) und Tragleiste (52) vorgesehen, welche durch die körperschallentkoppelnden Befestigungselemente (44, 45) geklemmt werden.

Bei einem Aufhängesystem (40) oben beschriebener Art können die Einrichtungsgegenstände (46) mit Hilfe eines Verbindungselementes (50) in die Tragleiste (52) einhängbar sein.

## Patentansprüche

1. Köperschallentkoppelnde Schraube (10) mit einem im Wesentlichen zylindrischen Körper (20), wobei der Körper an einem Ende einen flanschartigen Kopf (12) mit einem Kraftangriff (28) umfasst, an den sich ein Unterkopfabschnitt (14) und ein Halsbereich (16) anschliesst sowie ein Schaftabschnitt (18) mit einem Gewindeabschnitt (24), der mit einer Spitze (26) abschliesst, **dadurch gekennzeichnet, dass** der Kopf (12), die Unterseite des Kopfes (12) der Unterkopfabschnitt (14) und der Halsbereich (16) mit einem hartelastischen Material (32) nach Art einer Manschette bedeckt sind, aber die stirnseitige, vom Schaftabschnitt wegweisende Fläche des Kopfbereichs (22) unbedeckt bleibt und so nur am Rand eine Ummantelung aufweist, wobei das hartelastische Materials so gewählt wird, dass es im verbauten Zustand unter Vorspannung die körperschalldämpfende Wirkung entfaltet.

2. Schraube nach Anspruch 1, **dadurch gekennzeichnet, dass** der Schaftabschnitt (18) nicht von hartelastischem Material bedeckt ist.

3. Schraube nach Anspruch 1-2, **dadurch gekennzeichnet, dass** für die verschiedenen Bereiche Kopf 12, Unterkopfabschnitt 14 und Halsbereich 16 unterschiedliche Materialien mit verschiedenen Dämpfungs-/Elastizitätseigenschaften Verwendung finden.

4. Schraube nach Anspruch 1-3, **dadurch gekennzeichnet, dass** der Kopf (12) einen Aussendurchmesser aufweist, der grösser als der grösste Aussendurchmesser im Schaftbereich (18) ist.

5. Schraube nach Anspruch 1-4, **dadurch gekennzeichnet, dass** das hartelastische Material ein Thermoplast ist, insbesondere ein thermoplastisches Elastomer, Urethan und Vulkanisat (TPE, TPU, TPV).

6. Befestigungselement nach Anspruch 5, **dadurch gekennzeichnet, dass** das hartelastische Material ein Thermoplast ist, dessen ShoreA Härte zwischen 40 und 70 (beide Werte incl.) liegt.

7. Befestigungselement nach Anspruch 5-6, **dadurch gekennzeichnet, dass** das hartelastische Material ein Thermoplast ist, dessen ShoreA Härte zwischen 45 und 60 (beide Werte incl.) liegt.

8. Aufhängesystem (40) für Einrichtungsgegenstände (46) wie Möbel, Schränke und Regale an einem Wandabschnitt (42), umfassend körperschallentkoppelnde Schrauben (44, 45) gemäss Anspruch 1 bis 7, eine Tragleiste (52) mit Lastaufnahmepunkten (54) für solche Einrichtungsgegenstände (46) und Befestigungspunkte (56, 56') für besagte Schrauben (44, 45).

9. Aufhängesystem (40) nach Anspruch 8, **dadurch gekennzeichnet, dass** Dämpfungselemente (48, 48', 48") zwischen Wandabschnitt (42) und Tragleiste (52) vorgesehen sind, welche durch die körperschallentkoppelnden Schrauben (44, 45) geklemmt werden.

10. Aufhängesystem (40) nach Anspruch 8-9, **dadurch gekennzeichnet, dass** die Einrichtungsgegenstände (46) mit Hilfe eines Verbindungselementes (50) in die Tragleiste (52) einhängbar sind.
